# EUROPEAN PATENT APPLICATION

(11) **EP 2 223 826 A1**
(43) Date of publication of application: **01.09.2010**
(21) Application number: 09002908.3
(22) Date of filing: 28.02.2009
(51) Int. Cl.: B60R 13/08

(54) **Engine room for construction equipment having noise trap**

(71) Applicant: Volvo Construction Equipment Holding Sweden AB, 631 85 Eskilstuna (SE)
(72) Inventor: Cho, Gyeng Soo, Masan-si Gyeongsangnam-do (KR); Ikeda, Mike, Changwon Kyungsangnam-do (KR); Jeong, Kyu Cheon, Changwon-si Gyeongsangnam-do (KR)
(74) Representative: Dr. Weitzel & Partner

(57) **Abstract**

An engine room for construction equipment having a noise trap is provided, which can minimize noise, being generated in an engine room due to driving of an engine and a ventilating fan and emitted to an outside of the engine room, through a noise trap, and can prevent a fire caused by high heat of the engine from occurring. The engine room for construction equipment having a noise trap includes an engine, a radiator cooling water for cooling the engine, a shroud fixed to the radiator to form a moving path of external air, a circulating fan making the external air flowing into the engine room through an inlet port pass through the circumference of the engine and discharging the air having passed the engine to an outside of the engine room through an outlet port during rotation of the circulating fan, and a noise trap composed of a frame mounted on one side wall of the engine room and noise attenuation members fixed to the frame in layers so that the noise attenuation members become in contact with the noise emitted from the engine room to the outside of the engine room to shield and attenuate the noise.

## Description

### BACKGROUND OF THE INVENTION

### Field of the invention

The present invention relates to an engine room for construction equipment having a noise trap, which can minimize noise emitted to an outside of an engine room through a noise trap mounted on one side wall of the engine room.

More particularly, the present invention relates to an engine room for construction equipment having a noise trap, which can minimize noise, being generated in an engine room due to driving of an engine and a ventilating fan and emitted to an outside of the engine room, through a noise trap, and can prevent a fire caused by high heat of the engine from occurring.

### Description of the Prior Art

In the case of performing a work using construction equipment such as an excavator and so on, noise around a workshop has become influential as environmental problems, and its regulations have been gradually strengthened. In accordance with strengthening of noise regulations in Europe, technologies for low noise have been highlighted to minimize noise emitted to an outside of an engine room. For example, the work is performed in a state that a side door or an engine hood mounted on the engine room is tightly shut.

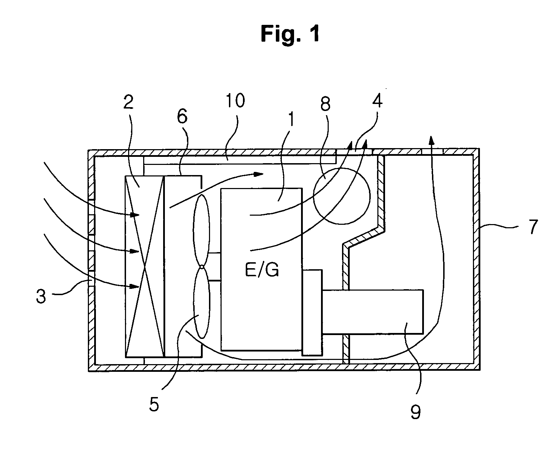

As illustrated in FIG. 1, a conventional engine room for construction equipment includes an engine 1, a radiator 2 having heat dissipation pins (not illustrated) formed on an outer surface thereof to cool cooling water circulating from the engine 1, a circulating fan 5 installed between the radiator 2 and the engine 1 to make external air flowing into the engine room through an inlet port 3 pass through the circumference of the engine 1 and to discharge the air having passed the engine to an outside of the engine room through an outlet port 4 during rotation of the circulation fan, a shroud 6 fixed to the radiator 2 to form a moving path of the external air flowing into the engine room, and a casing 7 forming outer walls of the engine room.

In the drawing, the reference numeral "8" denotes a muffler discharging exhaust gas from the engine 1 to the atmosphere, and "9" denotes a hydraulic pump connected to the engine 1.

According to the conventional engine room for construction equipment, a sound-absorbing material 10 is attached to the inner surface of the casing 7 to minimize the emission of noise, which is generated due to the driving of the engine 1, the cooling fan 5, and the hydraulic pump 9 installed in the engine room, to the outside of the engine room.

However, due to an insufficient area occupied by a sound-absorbing material 10, the efficiency in reducing the noise generated and emitted from the engine room is lowered. In addition, in the case where a foreign substance, such as dust, oil dirt, and the like, is stuck to the sound-absorbing material 10, the performance of the sound-absorbing material 10 is degraded, and this causes the replacement of the sound-absorbing material at a post management cost.

Also, due to high heat generated from the engine 1, the sound-absorbing material 10 neighboring the engine may catch fire.

### SUMMARY OF THE INVENTION

Accordingly, the present invention has been made to solve the above-mentioned problems occurring in the prior art while advantages achieved by the prior art are maintained intact.

An embodiment of the present invention relates to an engine room for construction equipment having a noise trap, which can minimize noise, being generated in an engine room and emitted to an outside of the engine room, by increasing a sound-absorbing area by a noise trap, and can prevent a fire from burning due to high heat generated from an engine.

An embodiment of the present invention relates to an engine room for construction equipment having a noise trap, which can facilitate checking and replacement of a noise trap in an engine room by mounting the noise trap on a side wall of the engine room that can be opened and closed.

An embodiment of the present invention relates to an engine room for construction equipment having a noise trap, which can lower the temperature in an engine room by external air having a temperature lower than that of the ground and flowing into the engine room through a noise trap by mounting the noise trap upwardly inclined towards an outside of the engine room.

In one embodiment of the present invention, there is provided an engine room for construction equipment having a noise trap, which includes an engine, a radiator cooling water for cooling the engine, a shroud fixed to the radiator to form a moving path of external air, a circulating fan making the external air flowing into the engine room through an inlet port pass through the circumference of the engine and discharging the air having passed the engine to an outside of the engine room through an outlet port during rotation of the circulating fan, and a noise trap composed of a frame mounted on one side wall of the engine room and noise attenuation members fixed to the frame in layers so that the noise attenuation members become in contact with the noise emitted from the engine room to the outside of the engine room to shield and attenuate the noise.

In a preferred embodiment of the present invention, the noise attenuation members may be fixed to the frame to be upwardly inclined towards the outside of the engine room so that the noise attenuation members become in contact with and shields the noise emitted to the outside of the engine room.

The engine room for construction equipment according to an embodiment of the present invention may further include a hinge member mounted on an outer surface of the frame to fix the noise trap so that the noise trap can be opened and closed against the engine room.

The noise attenuation members may include a container-shaped tray having an upper part that is opened, and a sound-absorbing material accommodated in the tray to absorb and attenuate the noise emitted to the outside of the engine room.

Through holes may be formed on a bottom surface and a side wall of the tray of the noise attenuation members so as to change a transfer direction of the noise emitted to the outside of the engine room to attenuate and absorb the noise through the sound-absorbing material.

The sound-absorbing materials may be made of any one of polyurethane, glass fiber, and sponge.

### BRIEF DESCRIPTION OF THE DRAWINGS

The above and other objects, features and advantages of the present invention will be more apparent from the following detailed description taken in conjunction with the accompanying drawings, in which:
FIG. 1 is a schematic view illustrating a conventional engine room for construction equipment;
FIG. 2 is a schematic view of an engine room for construction equipment having a noise trap according to an embodiment of the present invention;
FIG. 3 is a perspective view illustrating a main part of a noise trap as illustrated in FIG. 2;
FIG. 4 is a schematic plan view of an engine explaining opening/closing of a noise trap as illustrated in FIG. 2;
FIG. 5 is a view illustrating an engine room for construction equipment having a noise trap in a used state according to an embodiment of the present invention; and
FIG. 6 is an exemplary view illustrating a modified engine room for construction equipment having a noise trap according to an embodiment of the present invention.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

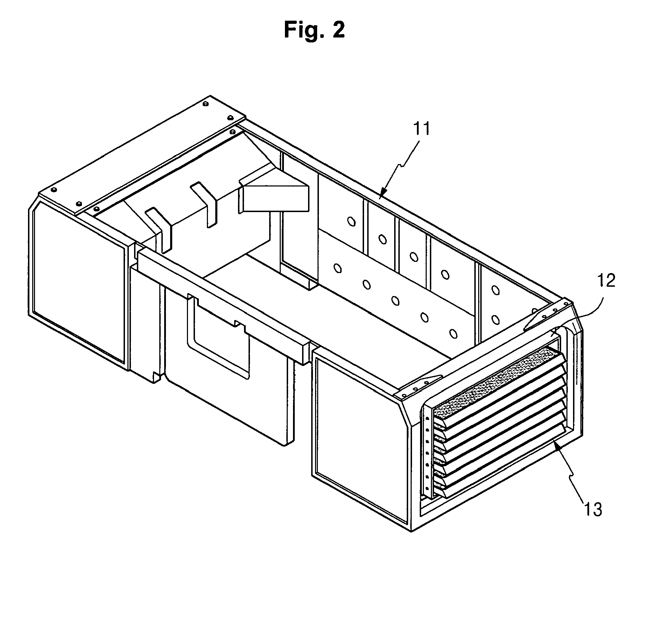

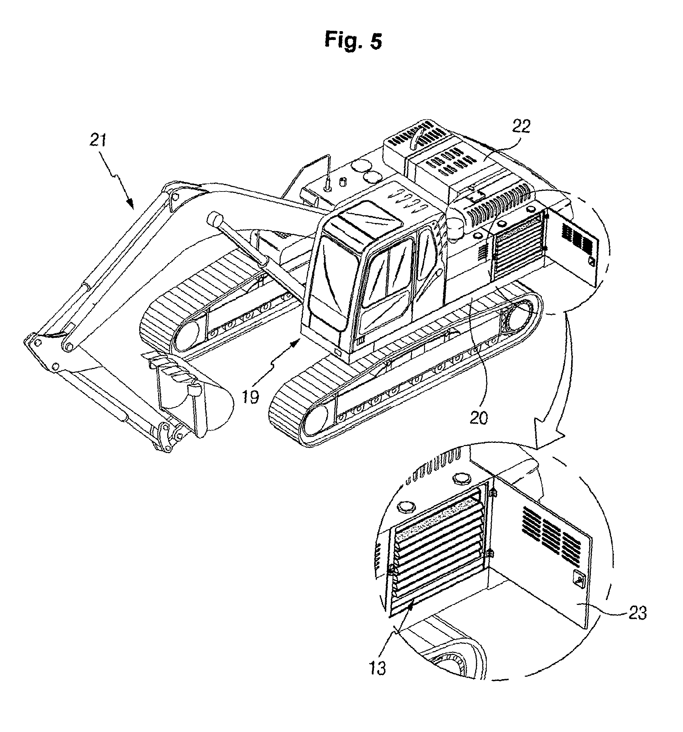

As illustrated in FIGS. 2 to 5, an engine room for construction equipment having a noise trap according to an embodiment of the present invention includes an engine 1, a radiator 2 having heat dissipation pins (not illustrated) formed on an outer surface thereof to cool cooling water circulating from the engine 1, a shroud 6 fixed to the radiator 2 to form a moving path of external air flowing into the engine room 11, a circulating fan 5 making the external air flowing into the engine room 11 through an inlet port 3 pass through the circumference of the engine 1 and discharging the air having passed the engine 1 to an outside of the engine room 11 through an outlet port 4 during rotation of the circulating fan 5, and a noise trap 14 composed of a frame 12 mounted on one side wall of the engine room 11 and noise attenuation members 13 fixed to the frame 12 in layers so that the noise attenuation members 13 become in contact with the noise generated in the engine room 11 and emitted to the outside of the engine room 11 (which is generated due to the driving of the engine 1 and the ventilation fan 5) to shield and attenuate the noise.

The construction except for the noise trap 14 composed of the frame 12 and the noise attenuation members 13, i.e. the construction including the engine 1, the radiator 2, the shroud 2, and the ventilation fan 5, is substantially the same as the construction of the engine room as illustrated in FIG. 1, and thus the detailed description of the construction and operation thereof will be omitted.

The noise attenuation members 13 are fixed to the frame 12 to be upwardly inclined towards the outside of the engine room 11 so that the noise attenuation members 13 become in contact with and shields the noise emitted to the outside of the engine room 11.

The noise attenuation members 13 include a container-shaped tray 18 (which may be made of an anti-abrasive metallic material) having an upper part that is opened, and a sound-absorbing material 17 accommodated in the tray 18 to absorb and attenuate the noise emitted to the outside of the engine room 11.

The engine room 11 for construction equipment according to an embodiment of the present invention further includes a hinge member 15 (e.g. a hinge) mounted on an outer surface of the frame 12 to fix the noise trap 14 so that the noise trap 14 can be opened and closed against the engine room 11.

Through holes 16 are formed on a bottom surface and a side wall of the tray 18 of the noise attenuation members 13 so as to change a transfer direction of the noise emitted to the outside of the engine room 11 to attenuate the noise, and to absorb the noise through the sound-absorbing material 17.

The sound-absorbing materials 17 are made of any one of polyurethane, glass fiber, and sponge.

In the drawing, the reference numeral "19" denotes a cab mounted on a upper swing structure 20, "21" denotes a working device composed of a boom, an arm, and a bucket driven by respective hydraulic cylinders, and "22" denotes an engine hood mounted on an upper part of the engine room 11 so that the engine hood can be opened/closed.

Hereinafter, the feature of the engine room for construction equipment having a noise trap according to an embodiment of the present invention will be described in detail with reference to the accompanying drawings.

As illustrated in FIGS. 2 to 5, noise is generated in the engine room 11 due to the driving of the engine 1 and the ventilation fan 5 during operation of the construction equipment such as an excavator. The noise emitted from the engine room 11 to the outside is shielded and attenuated by the noise trap 14 mounted on one side wall of the engine room 11.

Accordingly, the noise emitted to the outside of the engine room 11 can be reduced. In this case, since the engine 1, the ventilation fan 5, and the like, are substantially the same as those as illustrated in FIG. 1, the illustration thereof is omitted.

The noise emitted to the outside of the engine room 11 becomes in contact with upper surfaces of the noise attenuation members 13 fixed to the frame in layers so that outer ends of the noise attenuation members 13, and thus the noise is shielded and attenuated by the noise attenuation members 13.

In this case, since the noise emitted to the outside of the engine room 11 is absorbed by the sound-absorbing material 17 to be attenuated and shielded when it passes through the circumference of the noise attenuation members 13, the noise discharged to the outside of the engine room 11 can be minimized.

In the case where the noise emitted to the outside of the engine room 11 is in contact with the noise attenuation members 13, the transfer direction of the noise is changed by through-holes 16 formed on the tray 18. Accordingly, the noise passing through the through-holes 16 is absorbed by the sound-absorbing material 17 accommodated in the tray 18 to vanish, and thus the noise emitted to the outside of the engine room 11 is greatly reduced.

Also, even in the case where high heat is generated in the engine 1 due to the operation of the construction equipment, the construction equipment can be protected from catching fire (whereas in the conventional engine room, the sound-absorbing material attached to the inner surface of the engine room neighboring the engine may catch fire).

As the front end part of the noise trap 14 is upwardly inclined towards the outside of the engine room 11, external air having a temperature lower than that of the ground can flow into the engine room 11 through the noise attenuation members 13, and thus the temperature in the engine room 11 can be lowered.

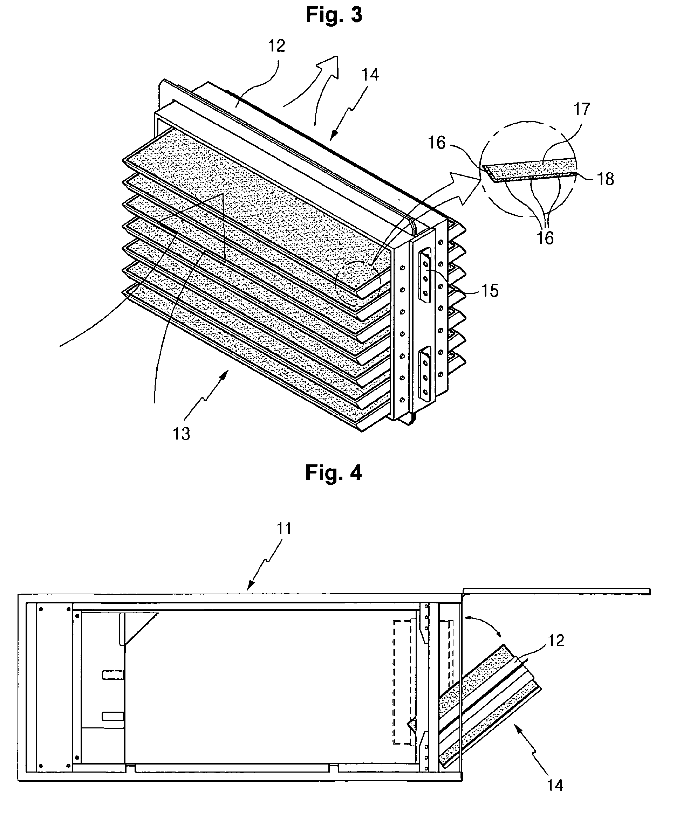

As illustrated in FIGS. 3 and 4, the noise trap 14 is mounted to be opened and closed against the engine room 11 by the hinge member 15 mounted on the outer surface of the frame 12. Accordingly, in the case of checking, repairing, or replacing the corresponding component in the engine room 11, an operator can perform the necessary work without going up toward the engine hood 22 that is on the upper part of the engine room 11.

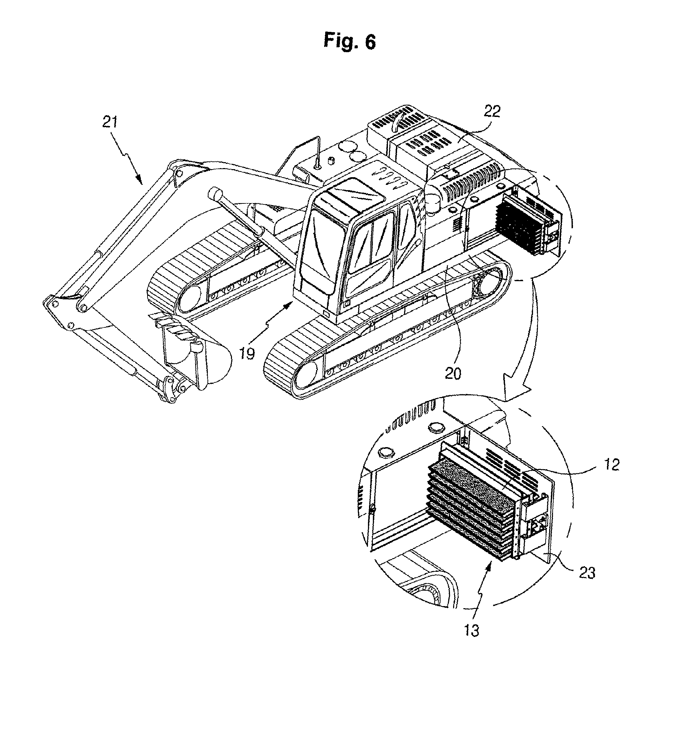

As illustrated in FIG. 6, according to the engine room for construction equipment having a noise trap according to an embodiment of the present invention, the noise trap 14, which is composed of the frame 12 and the noise attenuation members 13 fixed to the frame in accordance with the capacity or model number of the construction equipment, may be directly mounted on the side door 23 that is installed in the engine room 11 so that the side door can be opened and closed. Accordingly, the noise generated in the engine room 11 and emitted to the outside can be shielded and attenuated by the noise trap 14.

Although not illustrated in the drawings, in accordance with the capacity or model number of the construction equipment, the frame 12 of the noise trap 14 may be mounted on the upper swing structure of the equipment, and the noise attenuation members 13 may be fixed to the frame 12 in layers. In this case, the noise emitted to the outside of the engine room 11 can also be shielded and attenuated by the noise trap 14.

As described above, the engine room for construction equipment having a noise trap according to an embodiment of the present invention has the following advantages.

The emission of the noise generated in the engine room to the outside of the engine room is minimized to produce a comfortable working environment, and a fire caused by high heat generated from the engine can be prevented from burning.

The noise trap is mounted on the side wall of the engine room that can be opened and closed, and thus the checking and replacement of the noise trap in the engine room can be easily performed.

The noise trap is mounted to be upwardly inclined towards the outside of the engine room, and thus the cooling performance of the components in the engine room can be improved by the external air having a temperature lower than that of the ground and flowing into the engine room through the noise trap.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. An engine room for construction equipment having a noise trap, comprising:
an engine;
a radiator cooling water for cooling the engine;
a shroud fixed to the radiator to form a moving path of external air;
a circulating fan making the external air flowing into the engine room through an inlet port pass through the circumference of the engine and discharging the air having passed the engine to an outside of the engine room through an outlet port during rotation of the circulating fan; and
a noise trap composed of a frame mounted on one side wall of the engine room and noise attenuation members fixed to the frame in layers so that the noise attenuation members become in contact with the noise emitted from the engine room to the outside of the engine room to shield and attenuate the noise.

2. The engine room of claim 1, wherein the noise attenuation members are fixed to the frame to be upwardly inclined towards the outside of the engine room so that the noise attenuation members become in contact with and shields the noise emitted to the outside of the engine room.

3. The engine room of claim 1 or 2, wherein the noise attenuation members comprise a container-shaped tray having an upper part that is opened, and a sound-absorbing material accommodated in the tray to absorb and attenuate the noise emitted to the outside of the engine room.

4. The engine room of claim 1 or 2, further comprising a hinge member mounted on an outer surface of the frame to fix the noise trap so that the noise trap can be opened and closed against the engine room.

5. The engine room of claim 3, wherein through holes are formed on a bottom surface and a side wall of the tray of the noise attenuation members so as to change a transfer direction of the noise emitted to the outside of the engine room to attenuate and absorb the noise through the sound-absorbing material.

6. The engine room of claim 3, wherein the sound-absorbing materials are made of any one of polyurethane, glass fiber, and sponge.
